# FASCICULE DE BREVET EUROPEEN

(11) **EP 3 972 878 B1**
(45) Date de publication et mention de la délivrance du brevet: **09.10.2024**
(21) Numéro de dépôt: 20739746.4
(22) Date de dépôt: 22.05.2020
(51) Int. Cl.: B60T 8/17, B60T 8/32

(54) **SYSTÈME DE FREINAGE D'AÉRONEF AVEC DISPOSITIFS DE COMMANDE DISSIMILAIRES ET MODULE LOGICIEL UTILISE EN CAS DE DÉFAILLANCE**
FLUGZEUGBREMSANLAGE MIT UNTERSCHIEDLICHEN STEUERVORRICHTUNGEN UND SOFTWAREMODUL ZUR VERWENDUNG IM FALL EINES FEHLERS
AIRCRAFT BRAKE SYSTEM WITH DISSIMILAR CONTROL DEVICES AND SOFTWARE MODULE USED IN THE EVENT OF A FAULT

(30) Priorité: 23.05.2019 FR 1905438
(43) Date de publication de la demande: 30.03.2022
(73) Titulaire: Safran Landing Systems, 78140 Vélizy-Villacoublay (FR)
(72) Inventeur: FREY, Olivier, 78140 VELIZY-VILLACOUBLAY (FR); THIBAULT, Julien, 78140 VELIZY-VILLACOUBLAY (FR); ONFROY, Dominique, 78140 VELIZY-VILLACOUBLAY (FR)
(74) Mandataire: Cabinet Beau de Loménie
(86) Numéro de dépôt international: PCT/FR2020/050859
(87) Numéro de publication internationale: WO 2020/234551

(56) Documents cités:
- WO-A1-2008/144378
- US-A1- 2008 150 353
- US-A1- 2008 258 548

## Description

### Domaine Technique

L'invention se rapporte au domaine général du freinage des aéronefs et plus précisément au freinage électrique.

L'invention concerne tout particulièrement les systèmes qui commandent des actionneurs électromécaniques utilisés pour le freinage.

### Technique antérieure

Les aéronefs peuvent être équipés de systèmes de freinage électrique. Ces systèmes de freinage utilisent des actionneurs électromécaniques qui sont commandables pour ralentir la roue pour laquelle ils sont montés sur des freins.

De manière générale, un haut niveau de sécurité est désiré pour les systèmes de freinage. En particulier, on souhaite réduire l'impact des défaillances bien connues de l'homme du métier par l'expression « défaillances de mode commun » (« common mode failures » en anglais), caractérisées par l'apparition simultanée d'un défaut dans plusieurs éléments d'un système en conséquence d'une cause unique. Ces défaillances de mode commun peuvent affecter des éléments simples d'un système, et des éléments plus complexes, les éléments plus complexes étant davantage sujets à ces défaillances de mode commun.

Il a donc été proposé d'implémenter des équipements supplémentaires (équipements de secours) qui sont redondants avec les équipements utilisés pour le fonctionnement normal du système (équipements normaux) et qui sont activés en cas de défaut des équipements normaux. La conception et/ou la fabrication des équipements de secours est différente de celles des équipements normaux afin d'éviter le risque d'apparition d'une défaillance de mode commun et d'augmenter la robustesse des systèmes dans les aéronefs. Le principal inconvénient de ces solutions est son impact sur la masse de l'aéronef.

De l'état de la technique antérieure, on connait le document FR 2 952 009 qui décrit l'utilisation de contrôleurs qui ne contrôlent que deux actionneurs éléctromécaniques pour une roue équipée de quatre actionneurs électromécaniques. Le système de ce document est un système « actif/actif », selon une expression bien connue de l'homme du métier, qui a pour avantage d'avoir une masse réduite. Par contre, ce document n'aborde pas les défaillances de mode commun.

On connait également le document FR 2 954 753 qui propose d'implémenter une dissimilarité (même fonction mais présence de différences structurelles) dans une chaine de secours. Le système de ce document est du type « actif/passif », selon une autre expression bien connue de l'homme du métier. La solution de ce document n'est pas satisfaisante en ce qui concerne la masse du système. Aussi, le document FR 3 054 201 décrit une autre solution qui n'est pas non plus satisfaisante et qui utilise des modules de commande de freinage dissimilaires. Enfin, on connait le document US 2008 258548 qui décrit un système de freinage d'aéronef avec plusieurs canaux.

L'invention vise notamment à pallier ces inconvénients.

### Exposé de l'invention

A cet effet, l'invention propose un système de freinage d'aéronef comprenant :
- un premier groupe d'au moins un actionneur électromécanique apte à appliquer un effort de freinage pour ralentir au moins une roue de l'aéronef (par exemple, ladite au moins une roue étant équipée d'au moins l'actionneur du premier groupe),
- une deuxième groupe d'au moins un moins un actionneur électromécanique apte à appliquer un effort de freinage pour ralentir ladite au moins une roue de l'aéronef (par exemple, ladite au moins une roue étant équipée d'au moins l'actionneur du deuxième groupe),
- un premier dispositif de commande configuré pour commander le premier groupe d'au moins un actionneur au moyen d'un premier module logiciel et d'un deuxième module logiciel, le deuxième module logiciel étant configuré pour commander le premier groupe d'au moins un actionneur au moins en cas de défaillance du premier module logiciel, quatrième module logiciel, le quatrième module logiciel étant configuré pour commander le deuxième groupe d'au moins un actionneur au moins en cas de défaillance du troisième module logiciel,
dans lequel le premier dispositif de commande et le deuxième dispositif de commande sont dissimilaires.

Selon une caractéristique générale, le deuxième module logiciel diffère du premier module logiciel en ce que :
- il comporte un nombre plus faible d'entrées, et/ou
- il comporte un nombre plus faible de sorties, et/ou
- il comporte un nombre plus faible de fonctionnalités,
et/ou dans lequel le quatrième module logiciel diffère du troisième module logiciel en ce que :
- il comporte un nombre plus faible d'entrées, et/ou
- il comporte un nombre plus faible de sorties, et/ou
- il comporte un nombre plus faible de fonctionnalités.

Ainsi, l'invention propose d'utiliser à la fois une dissimilarité entre les dispositifs de commande (par exemple des dispositifs de commande matériels, qui peuvent comprendre des composants matériels, ou « hardware » en anglais), et une solution de secours logicielle (ou « software » en anglais). Cette solution est avantageuse en termes de masse car l'ajout d'une solution de secours logicielle (le deuxième et le quatrième modules logiciel) n'a pas d'impact sur la masse de l'aéronef, et elle permet d'obtenir une bonne robustesse.

Ici, on utilise deux dispositifs de commande dans une solution appelée « actif/actif » car ces deux dispositifs sont destinés à être utilisés simultanément pour la commande des actionneurs d'une même roue ; aussi, on note que dans le système proposé, ces deux dispositifs de commande sont dissimilaires.

L'utilisation de modules logiciels destinés à fonctionner en cas de défaillance d'un autre module logiciel est une solution appelée « actif/passif », car les deuxième et quatrième modules logiciels ne sont pas en fonctionnement (ils sont donc passifs) lorsque les premier et troisième modules logiciels ne sont pas défaillants. L'invention propose donc un système qui est à la fois « actif/actif » (pour les dispositifs de commande) et « actif/passif » (pour les modules logiciels), selon ces expressions bien connues de l'homme du métier.

Ici, le premier module logiciel et le troisième module logiciel commandent respectivement le premier et le deuxième groupe d'au moins un actionneur pour leur fonctionnement normal.

En outre, on peut noter que le premier dispositif de commande et le deuxième dispositif de commande comprennent tous les deux une structure de système électronique comprenant en particulier un processeur, une mémoire non volatile et/ou une mémoire volatile. L'homme du métier saura obtenir deux systèmes électroniques dissimilaires.

En fait, le risque de défaillance de mode commun sur des éléments de conception ou fabrication identiques est une notion connue de la norme ARP4761 de l'association professionnelle SAE International dans sa version de 1996.

Aussi, le premier groupe peut comprendre deux ou (ou plus) actionneurs électromécaniques aptes à appliquer un effort de freinage pour ralentir une ou plusieurs roues de l'aéronef, et le deuxième groupe peut comprendre deux (ou plus) actionneurs électromécaniques aptes à appliquer un effort de freinage pour ralentir ladite une ou plusieurs roues de l'aéronef.

La réduction du nombre d'entrées, de sorties, et/ou de fonctionnalités permet de simplifier le fonctionnement des deuxième et quatrième modules logiciels. Dès lors, la phase de test ou de validation des deuxième et quatrième modules logiciels peut être exhaustive (on peut tester toutes les combinaisons d'entrées et d'états possibles), ce qui permet d'obtenir une bonne robustesse.

On peut noter que ces différences peuvent également correspondre à un nombre de points de fonctionnement plus faible pour le deuxième et/ou le quatrième module logiciel.

On peut noter que cette ou ces réductions conduisent à obtenir un fonctionnement dans un mode de fonctionnement appelé mode dégradé.

Par exemple, le deuxième et/ou le quatrième module logiciel peuvent ne pas être configurés pour exécuter une fonction pour empêcher le blocage de la roue.

Préférentiellement, le deuxième et/ou le quatrième module logiciel sont configurés pour l'exécution de fonctions permettant l'application par les actionneurs de freinage d'un effort assurant une performance de freinage minimale tout en minimisant le risque de blocage de la roue, cet effort assurant une performance de freinage minimale peut être défini préalablement, par exemple au moyen de phases de test ou de calibration. L'application de l'effort assurant une performance de freinage minimale peut être considérée comme une fonction basique. D'autres fonctions non absolument nécessaires au freinage, typiquement des fonctions d'optimisation, de confort ou de maintenance, ne sont pas assurées par le deuxième et/ou le quatrième module logiciel afin de simplifier le deuxième et/ou le quatrième module logiciel. Le deuxième et le quatrième module logiciel ont donc des fonctionnalités qui sont réduites au strict minimum fonctionnel nécessaire.

En fait, le deuxième et/ou le quatrième module logiciel assurent un fonctionnement minimal ou essentiel des actionneurs électromécaniques.

Selon l'invention, le premier dispositif de commande et le deuxième dispositif de commande présentent au moins une différence structurelle. Par exemple, cela permet d'obtenir la dissimilarité.

En particulier le premier le premier dispositif de commande et le deuxième dispositif de commande peuvent présenter une ou plusieurs différences choisies dans la liste comprenant : des architectures différentes (architectures CPU différentes, arrangements différents des composants, utilisation de registres différents, utilisation d'entrées et sorties différentes), des technologies différentes (composants analogiques/numériques, mémoires flash/EEPROM, transistors TTL/MOS, condensateurs céramiques/chimiques, finesse de gravure différentes), des conceptions différentes (règles/processus de conception différents), des chaînes de fabrications différentes (processus de fabrication différents, lots de composants ou matière différents, réglages/dérives machines différents). Typiquement, des microcontrôleurs de fournisseurs différents seront définis par des concepteurs différents et fabriqués sur des chaînes différentes, minimisant le risque d'un défaut commun de conception ou de fabrication.

Ces différences permettent d'éviter des défaillances de mode commun.

Selon l'invention, le premier module logiciel et le deuxième module logiciel peuvent en outre être exécutés, par exemple par un même organe matériel (exemple un processeur appartenant au premier dispositif de commande), de manière isolée l'un par rapport à l'autre, et/ou le troisième module logiciel et le quatrième module logiciel peuvent en outre être exécutés, par exemple par un même autre organe matériel (par exemple un autre processeur du deuxième dispositif de commande), de manière isolée l'un par rapport à l'autre.

Cette caractéristique peut être implémenté en utilisant deux partitions logicielles, respectivement pour les premier/troisième et deuxième/quatrième modules, dont l'exécution peut être activée ou désactivée indépendamment l'une de l'autre par le gestionnaire de tâches du processeur du dispositif de commande.

Cela permet notamment de s'assurer qu'en cas de blocage du premier module logiciel ou du troisième module logiciel (par exemple s'ils exécutent une boucle infinie), il est possible d'exécuter le deuxième module logiciel et le quatrième module logiciel pour commander les actionneurs électromécaniques.

Selon un mode de réalisation particulier, le premier dispositif de commande et le deuxième dispositif de commande sont respectivement alimentés en énergie électrique par deux lignes d'alimentation électrique différentes.

Ce mode de réalisation particulier permet d'avoir en plus une redondance dans l'alimentation en énergie électrique.

Selon un mode de réalisation particulier, le système comprend un premier module de transmission de signaux de commande aux premier dispositif de commande et au deuxième dispositif de commande, et un deuxième module de transmission de signaux de commande aux premier dispositif de commande et au deuxième dispositif de commande configuré pour être utilisé en cas de défaillance du premier module de transmission de signaux de commande.

Ce mode de réalisation particulier améliore encore plus la robustesse du système.

Selon un mode de réalisation particulier, le premier dispositif de commande comprend un premier module de surveillance (« monitoring » en langue anglaise) du fonctionnement du premier dispositif de commande, et le deuxième dispositif de commande comprend un deuxième module de surveillance du fonctionnement du deuxième dispositif de commande dissimilaire du premier module de surveillance.

A titre indicatif, le module de surveillance peut permettre de contrôler le bon fonctionnement du dispositif de commande, typiquement en analysant la cohérence entre des consignes reçues via les premier et deuxième modules de transmission de signaux de commande visés ci-avant et les sorties des modules logiciels. En cas de détection d'un défaut de fonctionnement lors de l'opération du premier module logiciel, le module de surveillance peut ordonner une reconfiguration (dite reconfiguration interne) en activant le deuxième module logiciel, qui se substitue au premier module logiciel pour contrôler les actionneurs de freinage (dans le cas où le défaut en question est un défaut du logiciel et non un défaut matériel ; si le défaut est matériel, la reconfiguration logicielle est sans effet). En cas de détection d'un défaut et/ou de reconfiguration, il en informe les autres systèmes et le pilote (typiquement pour le prévenir d'une reconfiguration dans un mode dégradé).

Ce mode particulier de réalisation améliore également la robustesse du système.

Selon un mode de réalisation particulier, le deuxième module logiciel est en outre configuré pour commander le premier groupe d'au moins un actionneur à la place du premier module logiciel après que le premier dispositif de commande ait reçu ou généré une commande de basculement entre le premier et le deuxième module logiciel, et/ou le quatrième module logiciel est en outre configuré pour commander le deuxième groupe d'au moins un actionneur à la place du troisième module logiciel après que le deuxième dispositif de commande ait reçu ou généré une commande de basculement entre le troisième et le quatrième module logiciel.

Dans ce mode de réalisation particulier, les commandes de basculement peuvent avoir été émises par un utilisateur à travers une interface humain-machine (dans ce cas la commande est reçue). Alternativement, elles peuvent avoir été émises par un module de surveillance qui surveille si le premier ou le troisième module logiciel sont en défaillance (dans ce cas la commande est générée, par exemple dans le cadre d'une reconfiguration interne).

Selon un mode de réalisation particulier, le premier dispositif de commande et le deuxième dispositif de commande forment une première unité de freinage de ladite au moins une roue, le système comprenant en outre au moins une deuxième unité de freinage de ladite au moins une roue ou d'au moins une autre roue, la première unité de freinage et la deuxième unité de freinage étant identiques.

Le mode de réalisation précédent n'est nullement limitée à deux unités de freinage et vise également des aéronefs équipés de plus de deux roues.

En particulier, l'invention vise également une unité de freinage qui commande des actionneurs sur deux roues. Par exemple, le premier groupe peut comprendre au moins deux actionneurs électromécaniques aptes à appliquer des efforts de freinage pour ralentir deux roues de l'aéronef, et le deuxième groupe peut comprendre au moins deux actionneurs électromécaniques aptes à appliquer des efforts de freinage pour ralentir ces deux mêmes roues de l'aéronef.

Si l'aéronef est équipé de deux unités de freinage, leurs groupes d'actionneurs d'au moins deux actionneurs peuvent être répartis sur deux roues. Ainsi, la défaillance d'une unité de freinage permet de conserver une capacité de freinage sur deux roues plutôt que sur une unique roue.

L'invention propose également un aéronef équipé d'un système de freinage tel que défini ci-avant.
Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 illustre de manière schématique un système de freinage selon un exemple.
[Fig. 2] La figure 2 illustre une défaillance de mode commun d'un dispositif de commande.
[Fig. 3] La figure 3 illustre une défaillance de mode commun qui vise des modules logiciels.
[Fig. 4] La figure 4 illustre un aéronef selon un exemple.

### Description des modes de réalisation

On va maintenant décrire un système de freinage pour un aéronef selon un exemple.

Ce système de freinage est adapté pour le freinage électrique et il permet d'obtenir une bonne robustesse par rapport aux défaillances des composants du système, et en particulier par rapport aux défaillances de mode commun.

Ce système est à la fois du type actif/actif (pour les dispositifs qui comprennent des éléments matériels) et du type actif/passif (pour les modules logiciels), selon des expressions bien connues de l'homme du métier qui visent des types de redondances :
actif/actif : deux éléments sont prévus pour assurer la même fonction et sont simultanément actifs lorsque le système opère de façon nominale ;
actif/passif : un premier élément est prévu pour un fonctionnement nominal et un deuxième élément est prévu pour un fonctionnement en cas de défaillance du premier (mode de secours).

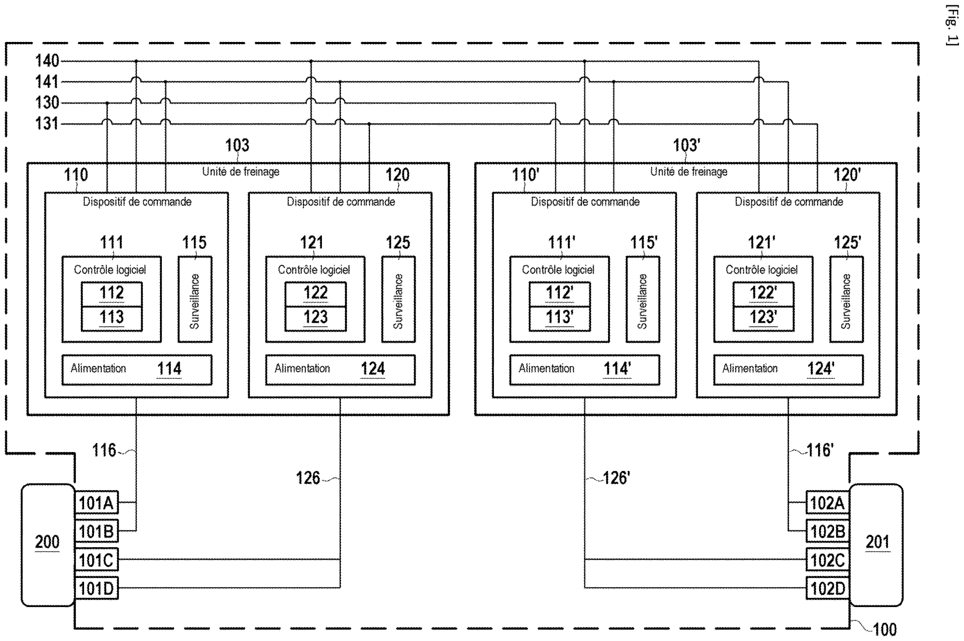

Sur la figure 1, on a représenté un système 100 selon un exemple. Ce système permet de commander le freinage de deux roues 200 et 201 d'un train d'atterrissage d'un aéronef. Le système 100 est configuré pour alimenter en énergie électrique et pour contrôler le fonctionnement d'actionneurs électromécaniques configurés pour ralentir les roues 200 et 201. Ici, la roue 200 est équipée de quatre actionneurs électromécaniques 101A, 101B, 101C et 101D et la roue 201 est équipée de quatre actionneurs électromécaniques 102A, 102B, 102C, et 102D.

Le mode de réalisation précédent n'est nullement limitée au freinage de deux roues et peut être adaptée au freinage de plus de deux roues d'un aéronef.

Les actionneurs d'une même roue sont commandés par une unité de freinage qui est propre à la roue. De ce fait, sur la figure, on a représenté deux unités de freinage : une unité de freinage 103 associée à la roue 200 et à ses actionneurs électromécaniques 101A à 101D, et une unité de freinage 103' associée à la roue 200 et à ses actionneurs électromécaniques 102A à 102D.

Dans ce qui suit, on va décrire l'unité de freinage 103. L'unité de freinage 103' est identique à l'unité de freinage 103 et ses éléments identiques portent les mêmes références numériques que les éléments de l'unité de freinage 103 mais avec la notation « ' » après les chiffres.

L'unité de freinage 103 comprend un premier dispositif de commande 110 et un deuxième dispositif de commande 120. Le premier dispositif de commande 110 est associé aux actionneurs électromécaniques 101A et 101B (qui forment un premier groupe d'actionneurs électromécaniques), et le deuxième dispositif de commande 120 est associé aux actionneurs électromécaniques 101C et 101D (qui forment un deuxième groupe d'actionneurs électromécaniques).

On comprend que les deux dispositifs de commande 110 et 120 sont dans une configuration actif/actif. Une défaillance d'un des deux dispositifs de commande n'empêche pas tout freinage de la roue, car le dispositif de commande non défaillant peut assurer un freinage avec au moins deux actionneurs électromécaniques.

Pour éviter des défaillances de mode commun pour les dispositifs 110 et 120, c'est-à-dire des défaillances qui ont la même cause, les dispositifs de commande 110 et 120 sont dissimilaires.

Le premier dispositif de commande 110 et le deuxième dispositif de commande 120 présentent au moins une différence structurelle. Par exemple, cette différence peut être choisie dans la liste comprenant : architectures CPU différentes, arrangements différents des composants, utilisation d'entrées et sorties différentes, règles/processus de conception différents, chaines de fabrications différentes, lots de composants différents.

Dans le dispositif de commande 110, on a prévu un organe de contrôle logiciel 111, comportant typiquement un microcontrôleur, comprenant deux modules logiciels distincts. Il comprend en particulier un premier module logiciel 112 qui permet d'opérer un contrôle normal des actionneurs électromécaniques 101A et 101B. Ce premier module logiciel est un logiciel complexe, qui possède de nombreuses entrées, de nombreuses sorties, et de nombreuses fonctionnalités (par exemple pour empêcher le blocage des roues ou des modes de maintenance).

L'organe de contrôle logiciel comporte également un deuxième module logiciel 113 qui permet également d'opérer un contrôle des actionneurs électromécaniques 101A et 101B. Ce deuxième module logiciel 113 est notamment configuré pour commander ces actionneurs en cas de défaillance du premier module logiciel 112. Préférentiellement, le deuxième module logiciel est un logiciel moins complexe que le premier module logiciel 112 : il a moins d'entrées, de sorties, et de fonctionnalités. Par exemple, il peut ne pas être capable de mettre en oeuvre un empêchement du blocage des roues (« anti-skid » en anglais) ou certains modes de maintenance. On notera en particulier que si la fonctionnalité qui empêche le blocage des roues n'est pas implémentée par le deuxième module logiciel 113, ce dernier peut être configuré pour commander les actionneurs électromécaniques de sorte qu'ils ne puissent appliquer qu'un niveau limité de freinage (ce qui empêche également le blocage des roues).

On comprend notamment que le deuxième module logiciel est particulièrement robuste, car il peut avoir été testé ou validé pour toutes les entrées possibles. En contrepartie, il fait fonctionner les actionneurs dans un mode dégradé. On notera que la simplicité de ce logiciel permet de d'éviter l'apparition d'erreurs de conception pouvant affecter ce module logiciel, et donc d'éviter l'apparition de défaillances de mode commun pouvant affecter toutes les occurrences de ce module logiciel simple dans le système.

On peut noter que les deux modules logiciels peuvent être exécutés de manière isolée l'un par rapport à l'autre : la défaillance de l'un n'affecte pas l'autre qui peut être exécuté.

On peut noter que les deux modules logiciels 112 et 113 sont dans une configuration actif/passif : le deuxième module logiciel 113 étant passif quand le premier module logiciel 112 est actif.

Le dispositif de commande 110 comporte en outre un module de gestion de l'alimentation 114 qui assure la distribution de l'énergie électrique et le pilotage des actionneurs à partir des commandes élaborées par le premier ou par le deuxième module logiciel.

Il comporte également un module de surveillance du fonctionnement du dispositif de commande 110. Ce module a des fonctions qui sont traditionnellement désignées par l'expression anglo-saxonne « monitoring ».

Aussi, la commande des actionneurs électromécaniques 101A et 101B est obtenue par une connexion électrique 116, pour transmettre de l'énergie électrique aux actionneurs électromécaniques.

Dans le deuxième dispositif de commande 120, dissimilaire du premier dispositif de commande 110, on a également un organe de contrôle logiciel 121. Préférentiellement, cet organe comprend un troisième module logiciel 122 qui peut être analogue au module logiciel 112, et un quatrième module logiciel 123 qui peut être analogue au module logiciel 113 (par analogue, on entend que leur code est identique).

Même si les modules logiciels sont analogues comme expliqué ci-avant, les éléments matériels utilisés pour implémenter les organes 111 et 121 peuvent être dissimilaires.

Par contre, le deuxième dispositif de commande comporte un module de gestion de l'alimentation électrique 124 qui peut présenter des dissimilarités avec le module de gestion de l'alimentation électrique 114 (même s'il a la même fonction).

Le deuxième dispositif de commande comporte également un module de surveillance 125 du fonctionnement du dispositif de commande 120 qui peut présenter des dissimilarités avec le module de surveillance 115, bien qu'il ait la même fonction.

Aussi, la commande des actionneurs électromécaniques 101C et 101D est obtenue par une connexion électrique 126, pour transmettre de l'énergie électrique aux actionneurs électromécaniques.

En ce qui concerne l'alimentation en énergie électrique, le premier dispositif de commande et le deuxième dispositif de commande sont respectivement alimentés par deux lignes d'alimentation 130 et 131 différentes et distinctes l'une de l'autre (dans une configuration actif/actif).

Pour commander les dispositifs de commande, on utilise un premier module de transmission de signaux commande 140 (par exemple un bus numérique) et un deuxième module de transmission de signaux de commande 141 (par exemple un autre bus numérique ou un organe qui délivre des signaux analogiques et/ou discrets) qui est configuré pour être utilisé en cas de défaillance du premier module de transmission de signaux de commande. Tous les dispositifs de commande reçoivent les signaux de commande des deux modules de transmission de signaux de commande.

Par exemple, pour le dispositif de commande 110, on peut utiliser le premier module de transmission de signaux de commande 140 pour le premier module logiciel 112 et le deuxième module de transmission de signaux de commande 141 pour le deuxième module logiciel 113.

On notera par ailleurs que le module de transmission de signaux de commande 140 et/ou le module de transmission de signaux de commande 141 peuvent fournir ces signaux de commande aux modules de surveillance 115 et 125. Cela peut permettre de vérifier si une incohérence apparait entre ces signaux (qui sont des consignes) et les sorties des organes de contrôle logiciel.

Comme expliqué ci-avant, l'unité de freinage 103' est analogue à l'unité de freinage 103, elle ne sera donc pas décrite plus en détail pour des raisons de concision.

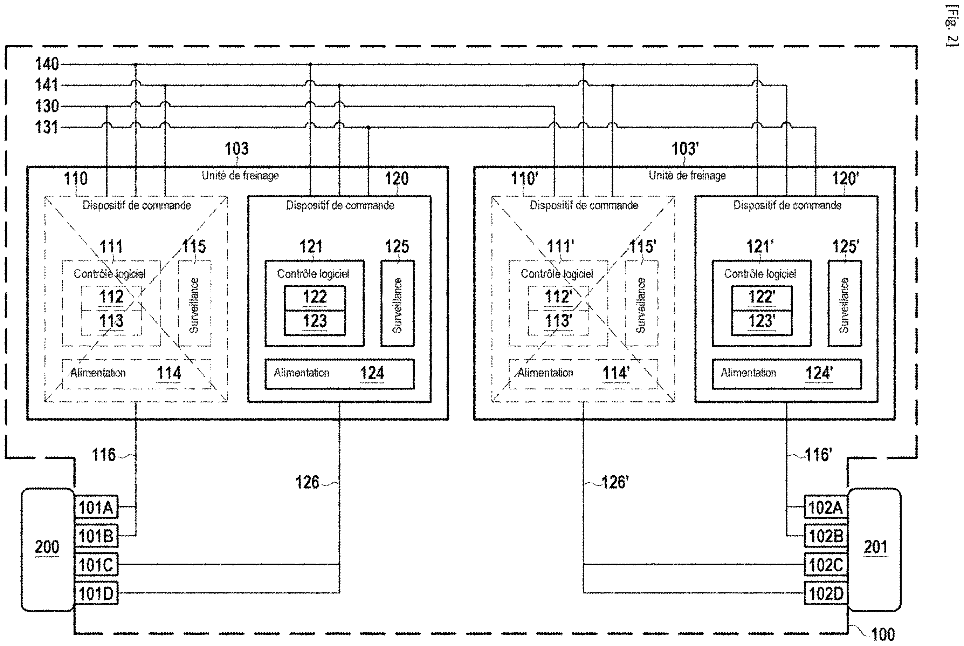

Sur la figure 2, on a représenté la défaillance des premiers dispositifs de commande 110 et 110', cet évènement pouvant se produire en cas de défaillance de mode commun.

Le freinage reste possible car les deuxièmes dispositifs de commande 120 et 120' restent opérationnels car ils ne sont normalement pas affectés par les mêmes défaillances que les premiers dispositifs de commande 110 et 110'. On notera cependant que seuls deux actionneurs par roue restent utilisables.

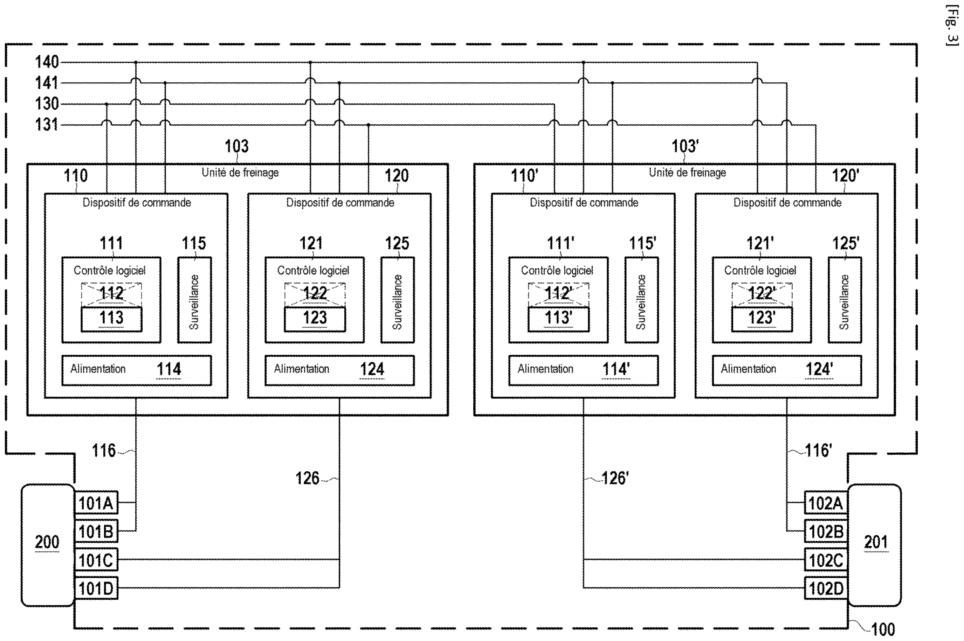

Sur la figure 3, on a représenté la défaillance des premiers modules logiciels 112 et 112', et des troisièmes modules logiciels 122 et 122', dans un cas où ces deux modules sont identiques. S'ils sont identiques, ils peuvent être affectés par une défaillance de mode commun.

On notera que si une telle défaillance se produit, les modules de surveillance 115, 125, 115', et 125' peuvent la détecter et commander le basculement entre les modules logiciels pour que les modules logiciels 113, 123, 113' et 123' soient utilisés (de manière alternative, ce basculement peut être réalisé par un utilisateur qui émet une commande en ce sens).

Dans cet exemple, on a un fonctionnement dégradé du freinage.

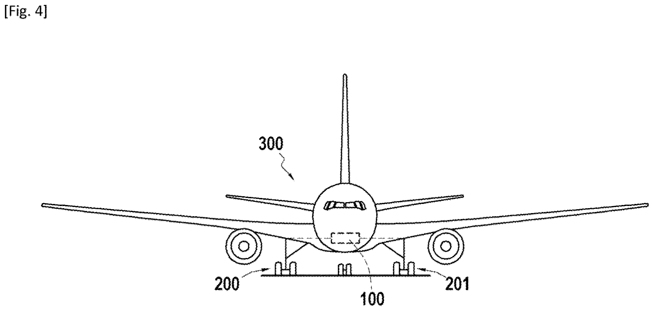

Sur la figure 4, on a représenté un aéronef 300 équipé d'un système de freinage 100 identique à celui décrit en référence à la figure 1, et qui gère le freinage de roues 200 et 201.

Les modes de mise en oeuvre et de réalisation décrits ci-avant permettent d'obtenir une bonne robustesse du freinage, et ce en limitant la quantité de redondances matérielles, car des redondances logicielles sont utilisées (les deux modules logiciels dans chaque organe de contrôle logiciel).

## Revendications

1. Système de freinage d'aéronef comprenant :
- un premier groupe d'au moins un actionneur électromécanique (101A, 101B) apte à appliquer un effort de freinage pour ralentir au moins une roue (200) de l'aéronef,
- une deuxième groupe d'au moins un moins un actionneur électromécanique (101C, 101D) apte à appliquer un effort de freinage pour ralentir ladite au moins une roue de l'aéronef,
- un premier dispositif de commande (110) configuré pour commander le premier groupe d'au moins un actionneur au moyen d'un premier module logiciel (112) et d'un deuxième module logiciel (113), le deuxième module logiciel étant configuré pour commander le premier groupe d'au moins un actionneur au moins en cas de défaillance du premier module logiciel,
- un deuxième dispositif de commande (120) configuré pour commander le deuxième groupe d'au moins un actionneur au moyen d'un troisième module logiciel (122) et d'un quatrième module logiciel (123), le quatrième module logiciel étant configuré pour commander le deuxième groupe d'au moins un actionneur au moins en cas de défaillance du troisième module logiciel,
dans lequel le premier dispositif de commande et le deuxième dispositif de commande sont dissimilaires et présentent au moins une différence structurelle,
**caractérisé en ce que** le deuxième module logiciel (113) diffère du premier module logiciel (112) **en ce que** :
- il comporte un nombre plus faible d'entrées, et/ou
- il comporte un nombre plus faible de sorties, et/ou
- il comporte un nombre plus faible de fonctionnalités,
et/ou dans lequel le quatrième module logiciel (123) diffère du troisième module logiciel (122) **en ce que** :
- il comporte un nombre plus faible d'entrées, et/ou
- il comporte un nombre plus faible de sorties, et/ou
- il comporte un nombre plus faible de fonctionnalités,
et dans lequel le premier module logiciel (112) et le deuxième module logiciel (113) peuvent en outre être exécutés de manière isolée l'un par rapport à l'autre, et/ou dans lequel le troisième module logiciel (122) et le quatrième module logiciel (123) peuvent en outre être exécutés de manière isolée l'un par rapport à l'autre.

2. Système selon la revendication 1, dans lequel le premier dispositif de commande et le deuxième dispositif de commande sont respectivement alimentés en énergie électrique par deux lignes d'alimentation électrique différentes (130, 131).

3. Système selon l'une quelconque des revendications 1 ou 2, comprenant un premier module de transmission de signaux de commande (140) aux premier dispositif de commande et au deuxième dispositif de commande, et un deuxième module de transmission de signaux de commande (141) aux premier dispositif de commande et au deuxième dispositif de commande configuré pour être utilisé en cas de défaillance du premier module de transmission de signaux de commande.

4. Système selon l'une quelconque des revendications 1 à 3, dans lequel le premier dispositif de commande comprend un premier module de surveillance (115) du fonctionnement du premier dispositif de commande, et le deuxième dispositif de commande comprend un deuxième module de surveillance (125) du fonctionnement du deuxième dispositif de commande dissimilaire du premier module de surveillance.

5. Système selon l'une quelconque des revendications 1 à 4, dans lequel le deuxième module logiciel (113) est en outre configuré pour commander le premier groupe d'au moins un actionneur à la place du premier module logiciel (112) après que le premier dispositif de commande ait reçu ou généré une commande de basculement entre le premier et le deuxième module logiciel, et/ou le quatrième module logiciel (123) est en outre configuré pour commander le deuxième groupe d'au moins un actionneur à la place du troisième module logiciel (122) après que le deuxième dispositif de commande ait reçu ou généré une commande de basculement entre le troisième et le quatrième module logiciel.

6. Système selon l'une quelconque des revendications 1 à 5, dans lequel le premier dispositif de commande et le deuxième dispositif de commande forment une première unité de freinage (103) de ladite au moins une roue (200), le système comprenant en outre au moins une deuxième unité de freinage (103') de ladite au moins une roue ou d'au moins une autre roue (201), la première unité de freinage et la deuxième unité de freinage étant identiques.

7. Aéronef comprenant un système de freinage (100) selon l'une quelconque des revendications 1 à 6.

## Patentansprüche

1. Flugzeugbremssystem, umfassend:
- eine erste Gruppe mindestens eines elektromechanischen Aktuators (101A, 101B), der geeignet ist, um eine Bremskraft anzuwenden, um mindestens ein Rad (200) des Luftfahrzeugs zu verzögern,
- eine zweite Gruppe mindestens eines elektromechanischen Aktuators (101C, 101D), der geeignet ist, um eine Bremskraft anzuwenden, um das mindestens ein Rad des Luftfahrzeugs zu verzögern,
- eine erste Steuervorrichtung (110), die konfiguriert ist, um die erste Gruppe mindestens eines Aktuators mittels eines ersten Softwaremoduls (112) und eines zweiten Softwaremoduls (113) zu steuern, wobei das zweite Softwaremodul konfiguriert ist, um die erste Gruppe mindestens eines Aktuators zumindest im Fall eines Ausfalls des ersten Softwaremoduls zu steuern,
- eine zweite Steuervorrichtung (120), die konfiguriert ist, um die zweite Gruppe mindestens eines Aktuators mittels eines dritten Softwaremoduls (122) und eines vierten Softwaremoduls (123) zu steuern, wobei das vierte Softwaremodul konfiguriert ist, um die zweite Gruppe mindestens eines Aktuators zumindest im Fall eines Ausfalls des dritten Softwaremoduls zu steuern, wobei die erste Steuervorrichtung und die zweite Steuervorrichtung verschieden sind und mindestens einen strukturellen Unterschied aufweisen,
**dadurch gekennzeichnet, dass** sich das zweite Softwaremodul (113) dadurch von dem ersten Softwaremodul (112) unterscheidet, dass:
- es eine geringere Anzahl an Eingängen umfasst, und/oder
- es eine geringere Anzahl an Ausgängen umfasst, und/oder
- es eine geringere Anzahl an Funktionen umfasst,
und/oder wobei sich das vierte Softwaremodul (123) dadurch von dem dritten Softwaremodul (122) unterscheidet, dass:
- es eine geringere Anzahl an Eingängen umfasst, und/oder
- es eine geringere Anzahl an Ausgängen umfasst, und/oder
- es eine geringere Anzahl an Funktionen umfasst,
und wobei das erste Softwaremodul (112) und das zweite Softwaremodul (113) ferner in Bezug aufeinander isoliert ausgeführt sein können, und/oder wobei das dritte Softwaremodul (122) und das vierte Softwaremodul (123) ferner in Bezug aufeinander isoliert ausgeführt sein können.

2. System nach Anspruch 1, wobei die erste Steuervorrichtung und die zweite Steuervorrichtung jeweils über zwei verschiedene elektrische Versorgungsleitungen (130, 131) mit elektrischer Energie versorgt werden.

3. System nach einem der Ansprüche 1 oder 2, umfassend ein erstes Steuersignalübertragungsmodul (140) an die erste Steuervorrichtung und die zweite Steuervorrichtung und ein zweites Steuersignalübertragungsmodul (141) an die erste Steuervorrichtung und die zweite Steuervorrichtung, das konfiguriert ist, um bei einem Ausfall des ersten Steuersignalübertragungsmoduls verwendet zu werden.

4. System nach einem der Ansprüche 1 bis 3, wobei die erste Steuervorrichtung ein erstes Überwachungsmodul (115) des Betriebs der ersten Steuervorrichtung umfasst, und die zweite Steuervorrichtung ein zweites Überwachungsmodul (125) des Betrieb der zweiten Steuervorrichtung umfasst, das von dem ersten Überwachungsmodul verschieden ist.

5. System nach einem der Ansprüche 1 bis 4, wobei das zweite Softwaremodul (113) ferner konfiguriert ist, um die erste Gruppe mindestens eines Aktuators anstelle des ersten Softwaremoduls (112) zu steuern, nachdem die erste Steuervorrichtung einen Umschaltbefehl zwischen dem ersten und dem zweiten Softwaremodul empfangen oder erzeugt hat, und/oder das vierte Softwaremodul (123) ferner konfiguriert ist, um die zweite Gruppe mindestens eines Aktuators anstelle des dritten Softwaremoduls (122) zu steuern, nachdem die zweite Steuervorrichtung einen Umschaltbefehl zwischen dem dritten und dem vierten Softwaremodul empfangen oder erzeugt hat.

6. System nach einem der Ansprüche 1 bis 5, wobei die erste Steuervorrichtung und die zweite Steuervorrichtung eine erste Bremseinheit (103) des mindestens einen Rads (200) bilden, das System ferner umfassend mindestens eine zweite Bremseinheit (103') des mindestens einen Rads oder mindestens eines anderen Rads (201), wobei die erste Bremseinheit und die zweite Bremseinheit identisch sind.

7. Luftfahrzeug, umfassend ein Bremssystem (100) nach einem der Ansprüche 1 bis 6.

## Claims

1. An aircraft brake system comprising:
- a first group of at least one electromechanical actuator (101A, 101B) able to apply a braking force to slow at least one wheel (200) of the aircraft,
- a second group of at least one electromechanical actuator (101C, 101D) able to apply a braking force to slow said at least one wheel of the aircraft,
- a first control device (110) configured to control the first group of at least one actuator by means of a first software module (112) and a second software module (113), the second software module being configured to control the first group of at least one actuator at least in the event of a fault of the first software module,
- a second control device (120) configured to control the second group of at least one actuator by means of a third software module (122) and a fourth software module (123), the fourth software module being configured to control the second group of at least one actuator at least in the event of a fault of the third software module,
wherein the first control device and the second control device are dissimilar and have at least one structural difference,
**characterized in that** the second software module (113) differs from the first software module (112) **in that**:
- it includes a smaller number of inputs, and/or
- it includes a smaller number of outputs, and/or
- it includes a smaller number of functionalities,
and/or wherein the fourth software module (123) differs from the third software module (122) **in that**:
- it includes a smaller number of inputs, and/or
- it includes a smaller number of outputs, and/or
- it includes a smaller number of functionalities,
and wherein the first software module (112) and the second software module (113) can further be executed in an isolated manner relative to one another, and/or wherein the third software module (122) and the fourth software module (123) can further be executed in an isolated manner relative to one another.

2. The system according to claim 1, wherein the first control device and the second control device are respectively supplied with electrical energy by two different electrical power supply lines (130, 131).

3. The system according to any one of claims 1 or 2, comprising a first module for transmitting control signals (140) to the first control device and to the second control device, and a second module for transmitting control signals (141) to the first control device and to the second control device configured to be used in the event of a fault in the first control signal transmission module.

4. The system according to any one of claims 1 to 3, wherein the first control device comprises a first module (115) for monitoring the operation of the first control device, and the second control device comprises a second module (125) for monitoring the operation of the second control device, dissimilar to the first monitoring module.

5. The system according to any one of claims 1 to 4, wherein the second software module (113) is further configured to control the first group of at least one actuator instead of the first software module (112) after the first control device has received or generated a command to switch between the first and the second software module, and/or the fourth software module (123) is further configured to control the second group of at least one actuator instead of the third software module (122) after the second control device has received or generated a command to switch between the third and the fourth software module.

6. The system according to any one of claims 1 to 5, wherein the first control device and the second control device form a first braking unit (103) for braking said at least one wheel (200), the system further comprising at least one second braking unit (103') for braking said at least one wheel or at least one other wheel (201), the first braking unit and the second braking unit being identical.

7. An aircraft comprising a brake system (100) according to any one of claims 1 to 6.
